(19) Europäisches Patentamt
European Patent Office
Office européen des brevets

(11) **EP 0 739 935 B1**

(12) **EUROPÄISCHE PATENTSCHRIFT**

(45) Veröffentlichungstag und Bekanntmachung des Hinweises auf die Patenterteilung:
**17.06.1998  Patentblatt 1998/25**

(51) Int Cl.⁶: **C08K 5/092**, C08G 77/18

(21) Anmeldenummer: **96106506.7**

(22) Anmeldetag: **25.04.1996**

(54) **Stabilisierung von reaktiven Organopolysiloxanharzen**

Stabilization of reactive polysiloxane resins

Stabilisation de résines de polysiloxane réactives

(84) Benannte Vertragsstaaten:
**DE ES FR GB**

(30) Priorität: **27.04.1995  DE 19515540**

(43) Veröffentlichungstag der Anmeldung:
**30.10.1996  Patentblatt 1996/44**

(73) Patentinhaber: **Wacker-Chemie GmbH**
**81737 München (DE)**

(72) Erfinder: **Mautner, Konrad, Dr.**
**84489 Burghausen (DE)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
EP-A- 0 526 975          EP-A- 0 616 001
DE-A- 3 904 973          FR-A- 2 147 296
FR-A- 2 596 056          US-A- 3 350 309
US-A- 4 515 932

**Beschreibung**

Die Erfindung betrifft lagerstabile Zusammensetzungen, die

(A) Organopolysiloxanharz, welches an Siliciumatome gebundene Hydroxyl- und/oder Alkoxygruppen aufweist, und
(B) Stabilisatoren umfassen, und ein Verfahren zur Stabilisierung von Organopolysiloxanharz (A).

Organopolysiloxanharze, welche an Siliciumatome gebundene Hydroxyl- und/oder Alkoxygruppen aufweisen, werden durch Hydrolyse von Alkoxysilanen und/oder deren Teilkondensationsprodukten in wäßrigem, saurem Milieu hergestellt. Diese Harze sind reaktiv und kondensieren bei der Aufarbeitung oder der Lagerung in Substanz, als Lösung oder Emulsion.

In der US-A-4,455,403 ist die Herstellung von Beschichtungsmitteln auf Silikonharzbasis als wäßrig alkoholische Lösungen durch Hydrolyse von Alkylalkoxysilanen in Gegenwart von Säuren beschrieben. Die Beschichtungsmittel erhalten durch höhere Alkanmonocarbonsäuren Lagerstabilität.

W. Noll, Chemistry and Technology of Silicones, Academic Press, Inc., Orlando, Florida, 1968, Seite 413 nennt als Stabilisatoren für Siliconharze gegen die Kondensation von Silanolgruppen Alkohole, Cersalze, Cyclohexanon und Chelatbildner.

Die bekannten Zusätze zur Stabilisierung von Organopolysiloxanharzen, welche an Siliciumatome gebundene Hydroxyl- und/oder Alkoxygruppen aufweisen, sind jedoch zu wenig wirksam. Beispielsweise gelieren durch Hydrolyse von Methyltrimethoxysilan hergestellte Harze bereits bei der Isolierung der Harze nach der Hydrolyse, auch wenn Chelatbildner, wie Acetylaceton zugesetzt werden.

Es bestand die Aufgabe, besonders lagerstabile Organopolysiloxanharzzusammensetzungen bereitzustellen, bei denen das Organopolysiloxanharz an Siliciumatome gebundene Alkoxygruppen und gegebenenfalls Hydroxylgruppen aufweist.

Die Erfindung betrifft lagerstabile Zusammensetzungen, die

(A) Organopolysiloxanharz, welches an Siliciumatome gebundene Alkoxy- und gegebenenfalls Hydroxylgruppen aufweist, welches aus Einheiten der allgemeinen Formel (1)

$$R_a(OR')_bSiO_{(4-a-b)/2} \qquad (1),$$

aufgebaut ist, in der

**R** gleiche oder verschiedene, gegebenenfalls mit Halogenatomen substituierte $C_1$- bis $C_{18}$-Kohlenwasserstoffreste,

**R'** gleiche oder verschiedene $C_1$- bis $C_4$-Alkylreste oder Wasserstoffatome,

**a** durchschnittlich einen Wert von 0,5 bis 1,9,

**b** durchschnittlich einen Wert von 0,05 bis 0,8 und die Summe von a+b maximal einen Wert von 1,9 bedeuten

und

(B) Stabilisatoren, die ausgewählt werden aus

(B1) aliphatischen Polycarbonsäuren mit mindestens 2 Carboxylgruppen und
(B2) Carbonsäureanhydriden aus aliphatischen Polycarbonsäuren mit mindestens 2 Carboxylgruppen umfassen.

Beispiele für nicht substituierte Reste R sind Alkylreste, wie der Methyl-, Ethyl-, n- Propyl-, iso-Propyl-, n-Butyl-, iso-Butyl-, sec.-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Oktylreste, wie der n-Octylrest und iso-Oktylreste, wie der 2,2,4-Trimethylpentylrest, Nonylreste, wie der n-Nonylrest, Decylreste, wie der n-Decylrest, Dodecylreste, wie der n-Dodecylrest, Oktadecylreste, wie der n-Oktadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest.

Beispiele für mit Halogenatomen substituierte Reste R sind mit Fluor und Chlor substituiert, wie der 3,3,3-Trifluor-n-propylrest, der 2,2,2,2',2',2'-Hexafluorisopropyl-rest, der Heptafluorisopropylrest, und Halogenarylreste, wie der o-, m-, und p-Chlorphenylrest.

Als Reste R sind unsubstituierte Kohlenwasserstoffreste bevorzugt, insbesondere solche mit 1 bis 8 Kohlenstoffatomen, speziell Methyl-, Ethyl-, Vinyl-, Tolyl- und Phenylreste.

Beispiele für Reste R' sind Wasserstoffatome, Methyl-, Ethyl-, n-Propyl-, iso-Propyl-, n-Butyl-, sec.-Butyl-, iso-Butyl- und tert.-Butylreste, insbesondere Methyl- und Ethylreste.

Der Index **a** hat vorzugsweise einen durchschnittlichen Wert von 0,8 bis 1,7, insbesondere von 1,0 bis 1,5.

Der Index **b** hat vorzugsweise einen durchschnittlichen Wert von 0,1 bis 0,5, insbesondere von 0,2 bis 0,4.

Die Summe von **a+b** besitzt vorzugsweise einen Wert von 1,0 bis 1,7.

Das Organopolysiloxanharz (A) weist insbesondere die allgemeine Formel (2)

$$[(RSiO_{3/2})_c(R_2SiO)_d(RSiO(OR'))_e(R_2SiO_{1/2}(OR'))_f$$

$$(RSiO(OH))_g(R_2SiO_{1/2}(OH))_h]_i \qquad (2),$$

auf, in der

| | |
|---|---|
| **c** | einen Wert von 0,77 bis 0,96, |
| **d** | einen Wert von 0 bis 0,22, |
| die Summe von **e+f** | einen Wert von 0,02 bis 0,08, |
| die Summe von **g+h** | einen Wert von 0,02 bis 0,05, und |
| **i** | einen Wert von 5 bis 1000, insbesondere 10 bis 150 besitzen und |
| **R** und **R'** | die vorstehenden Bedeutungen aufweisen. |

Die Stabilisatoren (B) bestehen aus einem gesättigten oder olefinisch ungesättigten aliphatischen Kohlenwasserstoff, der neben den Carboxyl- und Carbonsäureanhydridgruppen noch Carbonyl-, Hydroxylgruppen, Fluor- und Chloratome aufweisen kann.

Die Stabilisatoren (B) weisen vorzugsweise 3 bis 15, insbesondere 3 bis 8 Kohlenstoffatome und vorzugsweise 2 bis 4 Carboxylgruppen auf, die intramolekular zu Carbonsäureanhydridgruppen kondensiert sein können.

Bevorzugte Beispiele für die aliphatischen Polycarbonsäuren (B1) sind die Malon-, Bernstein-, Glutar-, Adipin-, Pimelin-, Suberin-, Malein-, Fumar-, Tartron-, Mesoxal-, Trauben-, Äpfel-, Chlorpropion-, Chlorbernstein-, Wein-, Acetondicarbon- und Citronensäure.

Bevorzugte Beispiele für die aliphatischen Carbonsäureanhydride aus aliphatischen Polycarbonsäuren (B2) sind Malon-, Bernstein-, Glutar-, Adipin- und Maleinsäureanhydrid.

Bezogen auf 100 Gewichtsteile Organopolysiloxanharz (A) enthalten die lagerstabilen Zusammensetzungen vorzugsweise mindestens 0,01, insbesondere 0,05 Gewichtsteile und vorzugsweise höchstens 1, insbesondere 0,2 Gewichtsteile Stabilisatoren (B).

Die lagerstabilen Zusammensetzungen können organische Lösungsmittel enthalten, als Emulsion oder in Substanz, also ohne organisches Lösungsmittel oder Wasser vorliegen.

Falls organische Lösungsmittel verwendet werden, sind Lösungsmittel oder Lösungsmittelgemische mit einem Siedepunkt bzw. Siedebereich von bis zu 120° C bei 0,1 MPa bevorzugt. Beispiele für solche Lösungsmittel sind Alkohole, wie Methanol, Ethanol, n-Propanol, iso-Propanol, n-Amylalkohol, i-Amylalkohol; Ether, wie Dioxan, Tetrahydrofuran, Diethylether, Di-isopropylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, wie Pentan, n-Hexan, Hexan-Isomerengemische, Heptan, Oktan, Waschbenzin, Petrolether, Benzol, Toluol, Xylole; Ketone, wie Aceton, Methylethylketon, Di-isopropylketon, Methyl-isobutylketon (MIBK); Ester, wie Butylacetat, Propylpropionat, Ethylbutyrat, Ethyl-isobutyrat; Schwefelkohlenstoff und Nitrobenzol, oder Gemische dieser Lösungsmittel.

Die Bezeichnung Lösungsmittel bedeutet nicht, daß sich alle Komponenten in diesem lösen müssen.

Die wässrigen Emulsionen enthalten einen an sich bekannten Emulgator.

Als anionische Emulgatoren eignen sich beispielsweise:

1. Alkylsulfate, besonders solche mit einer Kettenlänge von 8 bis 18 C-Atomen, Alkyl- und Alkarylethersulfate mit 8 bis 18 C-Atomen im hydrophoben Rest und 1 bis 40 Ethylenoxid (EO) - bzw. Propylenoxid(PO)einheiten.

2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C-Atomen; gegebenenfalls können diese Alkohole oder Alkylphenole auch mit 1 bis 40 EO-Einheiten ethoxyliert sein.

3. Alkali- und Ammoniumsalze von Carbonsäuren mit 8 bis 20 C-Atomen im Alkyl-, Aryl-, Alkaryl- oder Aralkylrest.

4. Phosphorsäureteilester und deren Alkali- und Ammoniumsalze, besonders Alkyl- und Alkarylphosphate mit 8 bis 20 C-Atomen im organischen Rest, Alkylether- bzw. Alkaryletherphosphate mit 8 bis 20 C-Atomen im Alkyl- bzw. Alkarylrest und 1 bis 40 EO-Einheiten.

Als nichtionische Emulgatoren eignen sich beispielsweise:

5. Polyvinylalkohol, der noch 5 bis 50 %, vorzugsweise 8 bis 20 % Vinylacetateinheiten aufweist, mit einem Polymerisationsgrad von 500 bis 3000.

6. Alkylpolyglycolether, vorzugsweise solche mit 8 bis 40 EO-Einheiten und Alkylresten von 8 bis 20 C-Atomen.

7. Alkylarylpolyglycolether, vorzugsweise solche mit 8 bis 40 EO-Einheiten und 8 bis 20 C-Atomen in den Alkyl- und Arylresten.

8. Ethylenoxid/Propylenoxid(EO/PO)-Blockcopolymere, vorzugsweise solche mit 8 bis 40 EO- bzw. PO-Einheiten.

9. Fettsäuren mit 6 bis 24 C-Atomen.

10. Naturstoffe und deren Derivate, wie Lecitin, Lanolin, Saponine, Cellulose; Cellulosealkylether und Carboxyalkylcellulosen, deren Alkylgruppen jeweils bis zu 4 Kohlenstoffatome besitzen.

11. Polare Gruppen enthaltende lineare Organo(poly)siloxane, insbesondere solche mit Alkoxygruppen mit bis zu 24 C-Atomen und/oder bis zu 40 EO- und/oder PO-Gruppen.

Als kationische Emulgatoren eignen sich beispielsweise:

12. Salze von primären, sekundären und tertiären Fettaminen mit 8 bis 24 C-Atomen mit Essigsäure, Schwefelsäure, Salzsäure und Phosphorsäuren.

13. Quarternäre Alkyl- und Alkylbenzolammoniumsalze, insbesondere solche, deren Alkylgruppe 6 bis 24 C-Atome besitzen, insbesondere die Halogenide, Sulfate, Phosphate und Acetate.

14. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate.

Als Ampholytische Emulgatoren eignen sich beispielsweise:

15. Langkettig substituierte Aminosäuren, wie N-Alkyl-di-(aminoethyl-)glycin oder N-Alkyl-2-aminopropionsäuresalze.

16. Betaine, wie N-(3-Acylamidopropyl)-N:N-dimethylammoniumsalze mit einem $C_8$-$C_{18}$-Acylrest und Alkyl-imidazolium-Betaine.

Bevorzugt werden nichtionische und ampholytische Emulgatoren.

Die Erfindung betrifft auch ein Verfahren zur Stabilisierung von Organopolysiloxanharz (A) bei dem das Organopolysiloxanharz (A) mit den Stabilisatoren (B) versetzt wird.

Die Stabilisatoren (B) werden in Substanz oder als Lösung in den vorstehenden Lösungsmitteln dem Organopolysiloxanharz (A) zugesetzt.

Das Organopolysiloxanharz (A) wird durch Hydrolyse von Alkoxysilanen und/oder deren Teilkondensationsprodukten in wäßrigem, saurem Milieu hergestellt.

Vorzugsweise werden zur Herstellung des Organopolysiloxanharzes (A) Silane der allgemeinen Formel (3)

$$R_kSi(OR')_{(4-k)} \qquad (3),$$

eingesetzt, wobei

**R** und **R'**  die vorstehend angegebenen Bedeutungen haben und

**k**  die Werte 0, 1, 2, 3 oder 4, vorzugsweise 1 und 2, durchschnittlich von 0,5 bis 1,9, vorzugsweise von 0,8 bis 1,7, insbesondere von 1,0 bis 1,5 besitzt.

Vorzugsweise wird ein Gemisch aus Silanen der allgemeinen Formel (3) eingesetzt, das 20 bis 100, insbesondere 80 bis 100 Gewichtsteile Silan, bei dem **k** den Wert 1 hat und 80 bis 100, insbesondere 0 bis 80 Gewichtsteile Silan, bei dem **k** den Wert 2 hat, umfaßt. Zusätzlich können 0 bis 10 Gewichtsteile Silan, bei dem **k** den Wert 0 hat, und 0 bis 10 Gewichtsteile Silan, bei dem **k** den Wert 3 hat, vorhanden sein.

Vorzugsweise werden Methyltriethoxysilan und Dimethyldiethoxysilan eingesetzt, wobei die Silane auch ungereinigt eingesetzt werden können, wie sie beispielsweise bei der Herstellung aus den entsprechenden Methylchlorsilanen in wasserhaltigem, azeotropen Ethanol anfallen.

Bei der Hydrolyse von Alkoxysilanen und/oder deren Teilkondensationsprodukten zu dem Organopolysiloxanharz (A) in wäßrigem, saurem Milieu kann die erforderliche Säure aus der entstehenden Salzsäure stammen.

Vorzugsweise wird Säure zugesetzt. Beispiele für Brönstedtsäuren, die im Verfahren eingesetzt werden können, sind Mineral-, Carbon- und Sulfonsäuren. Bevorzugt sind starke Säuren, wie Bor-, Tetrafluorobor-, Salpetersäure, salpetrige Säure, Phosphorsäure, phosphorige Säure, unterphosphorige Säure, Schwefelsäure, schwefelige Säure, Peroxoschwefel-, Salz-, Fluß-, Bromwasserstoff-, Perchlor-, Hexafluorophosphorsäure, Benzolsulfon-, p-Toluolsulfon-, Methansulfon-, Trifluormethansulfon- und Carbonsäuren, wie Chloressig-, Trichloressig-, Essig-, Acryl-, Benzoe-, Trifluoressig-, Zitronen-, Croton-, Ameisen-, Fumar-, Malein-, Malon-, Gallus-, Itacon-, Milch-, Wein-, Oxal-, Phthal- und Bernsteinsäure.

Auch die Stabilisatoren (B1) können bereits als Säure bei der Herstellung des Organopolysiloxanharzes (A) eingesetzt werden.

Die Säuren werden in wäßriger Verdünnung eingesetzt. Die Säurekonzentration der wäßrigen Säure beträgt vorzugsweise höchstens 5 Gew.-%, insbesondere 0,05 bis 2 Gew.-%. Besonders bevorzugt ist der Einsatz von 0,1 bis 1 Gew.-%iger Salzsäure. Die beschriebenen Säurekonzentrationen führen zu reaktiven Harzen, die reich an Hydroxy- und Alkoxygruppen sind und deshalb ohne Katalysatorzusatz härtbar sind. Höhere Säurekonzentrationen führen zu Harzen, die arm an Hydroxy- und Alkoxygruppen sind und deshalb wenig reaktiv und ohne Zusatz von Stabilisator (B) isolierbar sind. Diese Harze sind nur mit Katalysatorzusatz härtbar.

Vorzugsweise stammt die für die Hydrolyse der Alkoxysilane und/oder deren Teilkondensationsprodukte erforderliche Wassermenge aus der wäßrigen Säure. Vorzugsweise wird Wasser in der 1,5- bis 10 fachen, insbesondere in der 2- bis 4 fachen der theoretisch zur Hydrolyse erforderlichen molaren Menge eingesetzt.

Die Hydrolyse wird vorzugsweise bei Temperaturen von mindestens 60°C, vorzugsweise höchstens 150°C und insbesondere bei der Siedetemperatur des entstehenden Alkohols durchgeführt. Für die Hydrolyse werden Alkoxysilane und/oder deren Teilkondensationsprodukte vorzugsweise vorgelegt und die wäßrige Säure zudosiert, wobei die Energie der spontanen Hydrolysereaktion ausreicht, um die erforderliche Reaktionstemperaturen zu erreichen. Die Alkoxysilane und/oder deren Teilkondensationsprodukte können aber auch vor Hydrolysebeginn auf annähernd Reaktionstemperatur erwärmt werden.

Die Hydrolyse wird vorzugsweise bei einem Druck von 0,1 bis 0,5 MPa, insbesondere bei Umgebungsdruck durchgeführt.

Nach der Hydrolyse wird vorzugsweise der entstandene Alkohol abgetrennt. Dies erfolgt vorzugsweise durch Destillation, wobei bis zu 99 % des entstandenen Alkohols abdestilliert werden oder durch Zugabe von Überwasser, d.h. einer Wassermenge, die zur Ausbildung einer zweiten, wäßrig-alkoholischen Phase führt. Die Zugabe von Überwasser ist bevorzugt, da damit die Restsäure aus der sauren Hydrolyse leicht entfernt werden kann. Um die Phasentrennung zu verbessern wird vorzugsweise ein nicht wassermischbares, insbesondere polares Lösungsmittel verwendet, beispielsweise eines der vorstehend genannten nicht wasserlöslichen Lösungsmittel. Bevorzugt sind Alkohole, wie n-Amylalkohol, i-Amylalkohol; Ketone, wie Methylethylketon, Di-isopropylketon, Methyl-isobutylketon (MIBK); Ester, wie Butylacetat, Propylpropionat, Ethylbutyrat, Ethyl-isobutyrat. Insbesondere bevorzugt sind die Amylalkohole und MIBK.

Nach Ausbildung einer Phasentrennung wird die wäßrige Phase abgetrennt. Die erhaltene Harzlösung kann durch Versetzen mit Stabilisator (B) zu einer lagerstabilen Zusammensetzung vermischt werden.

Das Lösungsmittel kann auch entfernt werden, vorzugsweise durch Abdampfen, vorzugsweise bei 0,0001 bis 0,01 MPa, vorzugsweise bei 130 bis 180°C. Beispielsweise kann dazu ein Dünnschichtverdampfer oder eine Kurzwegdestillationsvorrichtung verwendet werden. Beim Entfernen des Lösungsmittels oder zuvor muß der Stabilisator (B) anwesend sein, andernfalls geliert das Organopolysiloxanharz (A). Man erhält ebenfalls eine lagerstabile Zusammensetzung, die beim Erhitzen ohne Katalysator aushärtet.

In den nachfolgenden Beispielen sind, falls jeweils nicht anders angegeben,

a) alle Mengenangaben auf das Gewicht bezogen;
b) alle Drücke 0,10 MPa (abs.);
c) alle Temperaturen 20° C.

Beispiele

**Beispiele 1 bis 11**

Zu 1069 g Methyltrimethoxysilan wurden innerhalb 5 min 260 g Wasser und 3,7 g 36%ige Salzsäure unter Rühren zugegeben. Die Temperatur stieg von 19°C auf Rückflußtemperatur (78°C), bei der die Mischung noch 30 min gehalten wurde. Anschließend wurden 1000 ml Methyl-isobutylketon (MIBK) und 2000 ml Wasser zugesetzt. Nach der Phasentrennung wurde die organische Phase abgetrennt und unter verschiedenen Bedingungen aufgearbeitet, welche in den Tabellen 1 und 2 aufgeführt sind:

Tabelle 1

| | Bsp.1* | Bsp.* | Bsp.3* | Bsp.4* | Bsp.5 | Bsp.6 |
|---|---|---|---|---|---|---|
| Flitration | keine | a | b | c | d | |
| Zusatz Bernsteinsäure [Gew.%] | - | - | - | - | 0,1 | 0,05 |
| Viskosität 50% in MIBK [mPa·s] | 10,1 | geliert beim Ausdestillieren | | | 14,6 | 14,3 |
| Gelierzeit [min] | 26 | | | | 13 | 5,3 |
| Viskosität nach 2 Monaten [mPa·s] | geliert | | | | 14,7 | |
| Viskosität nach 6 Monaten [mPa·s] | | | | | 30,7 | 17 |

Erläuterungen zu den Tabellen:
∗* = nicht erfindungsgemäß
Filtrierhilfsmittel a = 0,5 Gew.% Natriumaluminiumsilicat
Filtrierhilfsmittel b = Polypropylen Membranfilterscheibe
Filtrierhilfsmittel c = Filterplatte Seitz Supra$^R$ der Seitz-Filterwerke, Bad Kreuznach
Filtrierhilfsmittel d = 0,5 Gew.% Aktivkohle + 0,2 Gew% Natriumaluminiumsilicat

Tabelle 2

| | Bsp.7 | Bsp.8 | Bsp.9 | Bsp.10 | Bsp.11* |
|---|---|---|---|---|---|
| Filtration | d | d | d | d | d |
| Zusatz je 0,1 Gew.% | Maleinsäureanhydrid | Bernsteinsäureanhydrid | Zitronensäure | Fumarsäure | Acetylaceton |
| Viskosität 50% in MIBK [mPa·s] | 10,8 | 21,1 | 12,7 | 22,3 | geliert beim Ausdestillieren |
| Gelierzeit [min] | 15 | 5 | 10 | 4 | |

**Beispiel 12**

Es wurde wie in den Beispielen 1 - 11 gearbeitet. Eingesetzt wurde ein Silangemisch aus 17,2 g Dimethyldiethoxysilan und 1052 g Methyltriethoxysilan. Nach der Filtration über 0,5 Gew.% Aktivkohle und 0,2 Gew.% Natriumaluminiumsilicat wurde 0,1 Gew.% Bernsteinsäure zugesetzt. Die Viskosität der 50%igen Harzlösung in MIBK betrug 14 mPa·s, die Gelierzeit 8 min. Nach 6 Monaten betrug die Viskosität der 50%igen Harzlösung in MIBK 17,5 mPa·s, die Gelierzeit 9 min.

EP 0 739 935 B1

**Patentansprüche**

1. Lagerstabile Zusammensetzungen, die

   (A) Organopolysiloxanharz, welches an Siliciumatome gebundene Alkoxy- und gegebenenfalls Hydroxylgruppen aufweist, welches aus Einheiten der allgemeinen Formel (1)

   $$R_a(OR')_b SiO_{(4-a-b)/2} \qquad (1),$$

   aufgebaut ist, in der

   R      gleiche oder verschiedene, gegebenenfalls mit Halogenatomen substituierte $C_1$- bis $C_{18}$-Kohlenwasserstoffreste,
   R'     gleiche oder verschiedene $C_1$- bis $C_4$-Alkylreste oder Wasserstoffatome,
   a      durchschnittlich einen Wert von 0,5 bis 1,9,
   b      durchschnittlich einen Wert von 0,05 bis 0,8 und die Summe von **a+b** maximal einen Wert von 1,9 bedeuten

   und
   (B) Stabilisatoren, die ausgewählt werden aus

      (B1) aliphatischen Polycarbonsäuren mit mindestens 2 Carboxylgruppen und
      (B2) Carbonsäureanhydriden aus aliphatischen Polycarbonsäuren mit mindestens 2 Carboxylgruppen umfassen.

2. Lagerstabile Zusammensetzungen nach Anspruch 1 oder 2, wobei die Stabilisatoren (B) vorzugsweise 3 bis 15 Kohlenstoffatome und 2 bis 4 Carboxylgruppen aufweisen, die intramolekular zu Carbonsäureanhydridgruppen kondensiert sein können.

3. Lagerstabile Zusammensetzungen nach Anspruch 1 oder 2, wobei die lagerstabilen Zusammensetzungen bezogen auf 100 Gewichtsteile Organopolysiloxanharz (A) mindestens 0,01 und höchstens 1 Gewichtsteile Stabilisatoren (B) enthalten.

4. Lagerstabile Zusammensetzungen nach einem der Ansprüche 1 bis 3, wobei die lagerstabilen Zusammensetzungen organische Lösungsmittel enthalten, als Emulsion oder in Substanz, also ohne organisches Lösungsmittel oder Wasser vorliegen.

5. Verfahren zur Stabilisierung von Organopolysiloxanharz (A) gemäß Anspruch 1, bei dem das Organopolysiloxanharz (A) mit den Stabilisatoren (B) gemäß Anspruch 1 versetzt wird.

**Claims**

1. Storage-stable compositions comprising

   (A) organopolysiloxane resin having alkoxy and possibly hydroxyl groups bonded to silicon atoms, which is made up of units of the general formula (1)

   $$R_a(OR')_b SiO_{(4-a-b)/2} \qquad (1),$$

   where

   R      are identical or different, unsubstituted or halogen-substituted $C_1$-$C_{18}$-hydrocarbon radicals,
   R'     are identical or different $C_1$-$C_4$-alkyl radicals or hydrogen atoms,
   a      has an average value of from 0.5 to 1.9,

7

b        has an average value of from 0.05 to 0.8 and the sum of a+b has a maximum value of 1.9 and

(B) stabilizers selected from among

(B1) aliphatic polycarboxylic acids having at least 2 carboxyl groups and
(B2) carboxylic anhydrides of aliphatic polycarboxylic acids having at least 2 carboxyl groups.

2.  Storage-stable compositions according to Claim 1 or 2 [sic], wherein the stabilizers (B) preferably have from 3 to 15 carbon atoms and from 2 to 4 carboxyl groups which can be intramolecularly condensed to form carboxylic anhydride groups.

3.  Storage-stable compositions according to Claim 1 or 2, containing at least 0.01 and at most 1 part by weight of stabilizers (B) per 100 parts by weight of organopolysiloxane resin (A).

4.  Storage-stable compositions according to any of Claims 1 to 3, containing organic solvents, or being present as emulsion or in bulk, i.e. without organic solvent or water.

5.  Process for stabilizing organopolysiloxane resin (A) according to Claim 1, which comprises admixing the organopolysiloxane resin (A) with the stabilizers (B) according to Claim 1.


**Revendications**

1.  Compositions stables au stockage comprenant

(A) une résine d'organopolysiloxane présentant des groupes alcoxy et éventuellement hydroxyle liés à des atomes de silicium, qui est constituée de motifs de formule générale (1)

$$R_a(OR')_b SiO_{(4-a-b)/2} \qquad (1),$$

dans laquelle

R        représente des radicaux hydrocarbonés en $C_1$ à $C_{18}$, identiques ou différents, éventuellement substitués par des atomes d'halogène,
R'       représente des radicaux alkyle en $C_1$ à $C_4$, identiques ou différents, ou des atomes d'hydrogène,
a        vaut en moyenne de 0,5 à 1,9,
b        vaut en moyenne de 0,05 à 0,8 et la somme de a + b vaut au maximum 1,9

et
(B) des stabilisants choisis parmi

(B1) des acides polycarboxyliques aliphatiques ayant au moins 2 groupes carboxyle et
(B2) des anhydrides carboxyliques d'acides polycarboxyliques aliphatiques ayant au moins 2 groupes carboxyle.

2.  Compositions stables au stockage selon la revendication 1 ou 2, les stabilisants (B) contenant de préférence de 3 à 15 atomes de carbone et de 2 à 4 groupes carboxyle qui peuvent être condensés de manière intramoléculaire en groupes anhydride carboxylique.

3.  Compositions stables au stockage selon la revendication 1 ou 2, les compositions stables au stockage contenant au moins 0,01 et au plus 1 partie en poids de stabilisants (B), sur la base de 100 parties en poids de résine d'organopolysiloxane (A).

4.  Compositions stables au stockage selon l'une quelconque des revendications 1 à 3, les compositions stables au stockage contenant des solvants organiques et se présentant sous forme d'émulsion ou en masse, par conséquent sans solvant organique ni eau.

5. Procédé de stabilisation d'une résine d'organopolysiloxane (A) selon la revendication 1, dans lequel la résine d'organopolysiloxane (A) est mélangée avec les stabilisants (B) selon la revendication 1.